# EUROPEAN PATENT SPECIFICATION

(11) **EP 1 221 568 B1**
(45) Date of publication and mention of the grant of the patent: **28.07.2004**
(21) Application number: 00128712.7
(22) Date of filing: 29.12.2000
(51) Int. Cl.: F16L 37/20, F16L 37/10

(54) **Quick connector with slidable toggle-operated collar**
Schnellkupplung mit gleitbaren kniebedienten Spannvorrichtung
Raccord rapide avec un bridage à genoullière glissable

(43) Date of publication of application: 10.07.2002
(73) Proprietor: FUSHING BROTHERS & CO., Taipei City, Taiwan (CN)
(72) Inventor: Chen, Ray, Taipei City, Taiwan (KR)
(74) Representative: Viering, Jentschura & Partner

(56) References cited:
- DE-A- 3 231 950
- DE-A- 19 841 571
- DE-C- 103 608
- DE-C- 851 706
- US-A- 3 632 142

## Description

The present invention relates to an enhancing buckling structure of a quick connector, in which a handle type tenon of simple-made and applying to various materials is used to enhance the connecting strength of the connector so that as buckling, the connector will not release.

In the prior art quick connector, two opposite connectors are engaged. Then a simple buckle is used to fix the structure. Although, this structure can be assembled with less time, but the articles to be transferred is easy to drain out. The prior art structure has defects of the buckle of the connector being easily to release due to mistakes in operation, the buckling being worn due to being used for longer time so that the buckle is unstable and then the connector releases, loose engagement in the annular buckle so that the connector will release.

Therefore, there are many defects in the prior art which are necessary to be improved.

DE-A-198 41 571 and DE-A-32 31 950 each disclose a buckling structure of a quick connector, comprising a connector body having retaining hooks, a locking ring having a retaining handle with a tenon, and a ratchet ring formed on the connector body, wherein the tenon of the retaining handle is engageable with the ratchet ring.

Accordingly, the primary object of the present invention is not only to provide a enhancing buckling structure of a quick connector, which provides a double locking function to the connector by adding a handle type retaining device but to set up a ring groove that is suited by a ratchet ring to engage the fixed holes of the ring groove and the tenon of the ratchet ring and fasten the ratchet ring on the ring groove so as to simplify the fabrication, reduce the capitalized cost, and be applied by various material.

Another object of the present invention is to provide a enhancing buckling structure of a quick connector, which can prevent that as the pipe is released in transferring objects.

Another object of the present invention is to provide a enhancing buckling structure of a quick connector, in which a ratchet ring serves to combine a slide buckle and the body. In detaching and updating, it is only needed to detach the ratchet ring and then the annular slide buckle can be taken down.

According to the invention, this is achieved by a buckling structure according to the features of claim 1. Advantageous further embodiments are described in the subclaims.

Thus an enhancing buckling structure of a quick connector is used to enhance the connecting strength of the connector so that as buckling, the connector will not release.

The various objects and advantages of the present invention will be more readily understood from the following detailed description when reading in conjunction with the appended drawing.
Fig. 1 is a perspective view of a prior art quick connector.
Fig. 2 is a perspective view showing the retaining handle of the enhancing buckling structure of a quick connector according to the present invention.
Fig. 3 is an exploded perspective view of the enhancing buckling structure of a quick connector in the present invention.
Fig. 4 is a combination view of the enhancing buckling structure of a quick connector in the present invention.
Fig. 5 shows the use of the enhancing buckling structure of a quick connector in the present invention.

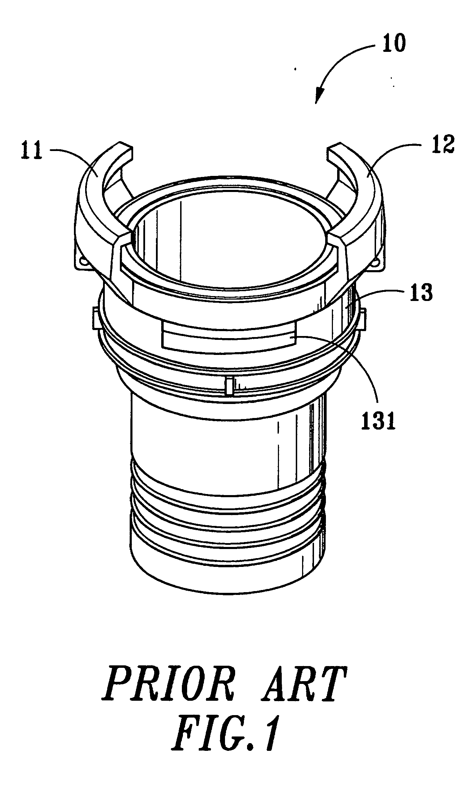

Fig. 1 shows a prior art quick connector comprising a body 10 the front end of which is extended with two opposite retaining hooks 11 and 12. In combining, a trench and an annular ring 13 are formed, which are engaged with the body 10 and are rotatable. Two symmetric sides are protruded with pins 131 (with respect to a position pin 132). As the quick connector is connected, the two retaining hooks 11 and 12 are buckled vertically. Then, by the annular ring 13 to combine and rotate, the pins 131 and 132 can be inserted into the trenches. In the combining structure of the connector, there are many defects. For example, in the retaining portion, only one pin is used in fixing, thus the tightness is low. The operation, lifetime and wearing of the retaining structure are easily to be damaged.

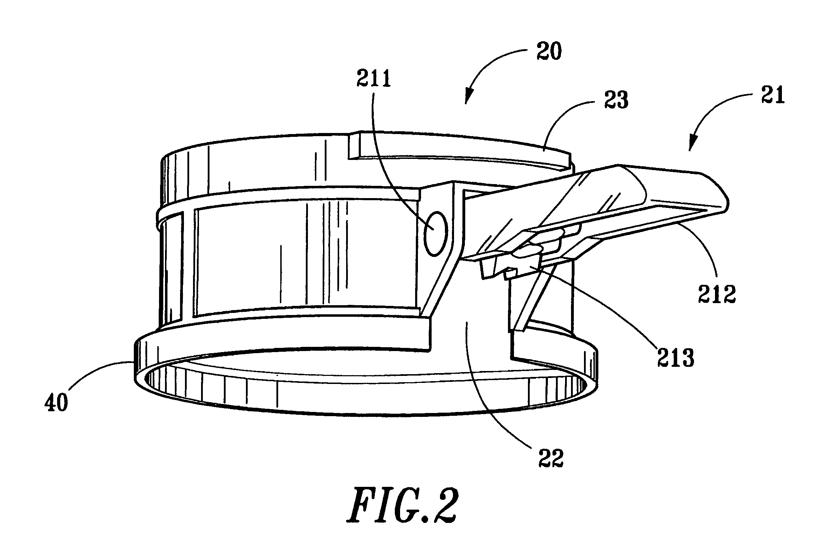

Referring to Fig. 2, in the slide buckle 20 of the present invention, a retaining handle 21 is further added. If the connector is not used, despite the retaining handle 21 is parallel or vertical to the body, it has no effect. By the upward and downward movement of the front axial portion 211 and the handle 212, the operation is easy. The tenon 213 has a saw teeth shape, as it is inserted into the groove of the body in the hollowed portion 22, it is easy to align with the groove, and the protected top 40 encircled the bottom is a protruding outward structure is mainly applied to protect the inner components. The front end thereof is installed with a strip 23 which has an inclined surface in a circumferential direction thereof and which can be rotated into a hidden groove in the retaining hook as the connector is connected.

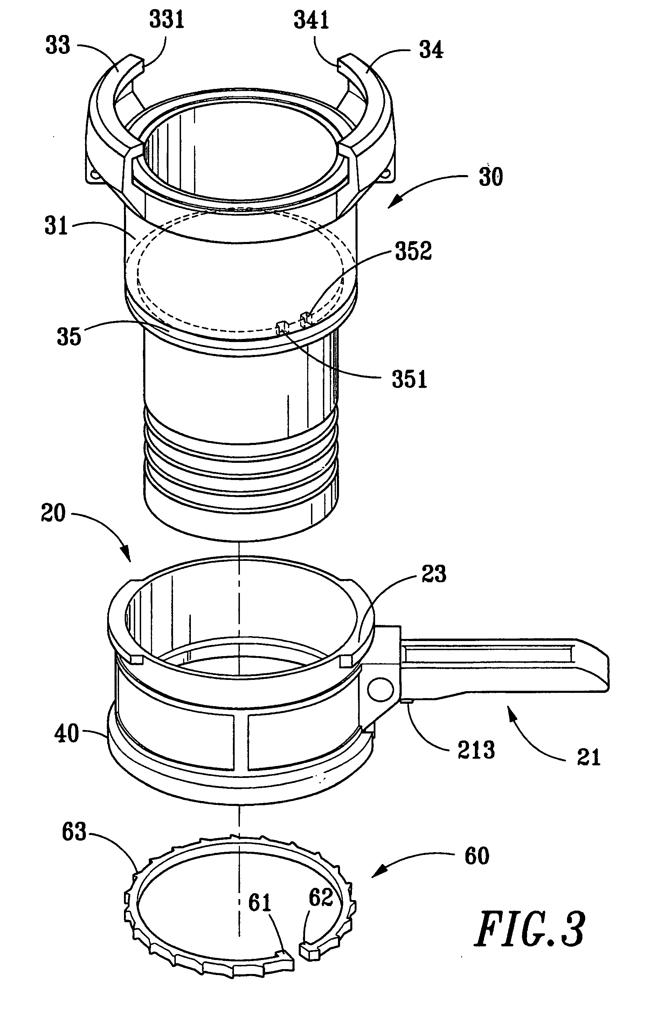

Referring to Fig. 3, the connector body 30 provides a smooth sliding track 31 so that an annular slide buckle 20 can be received therein, and is locked by a ratchet ring 60 so that the slide buckle 20 is rotatable in the connector body 30. The front extension is installed two reverse hooks 33 and 34. The width of the protruding inner edge wall 331 is different from the inner edge wall 341. Therefore, the retaining hooks 33 , 34 with buckles are formed with a hidden groove corresponding to the shape of the strips of the slide buckle. The connector which consisted of a ring groove 35 sets up 2 fixed holes 351, 352 inside, and the ratchet ring 60 provided with 2 tenons 61, 62 suits in the ring groove 35 so the tenons 61, 62 can engage with the fixed holes 351, 352 to fasten the ratchet ring 60 then the retaining handle 21 promptly engages with the ratchet 63 of ratchet ring 60. Thus an enhancing buckling structure of a quick connector is used to enhance the connecting strength of the connector so that as buckling, the connector will not release. Furthermore, the slide buckle consists of a protected top 40 protruding outward and encircling the ratchet ring 60 in which to protect the ratchet ring 60 and prevent the users from hurt for carelessly scraping it.

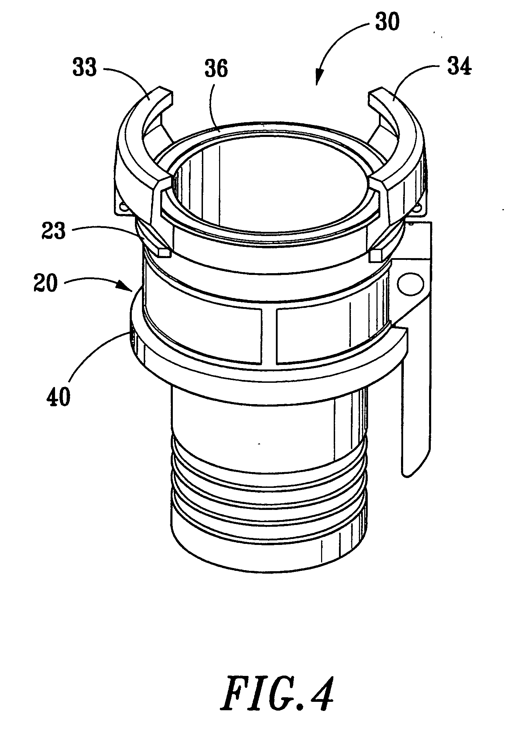

Referring to Fig. 4, by the locking of the ratchet ring 60, the slide buckle 20 is rotable on the connector body 30. An elastic pad 36 is formed in the opening for increasing the tightness as buckling.

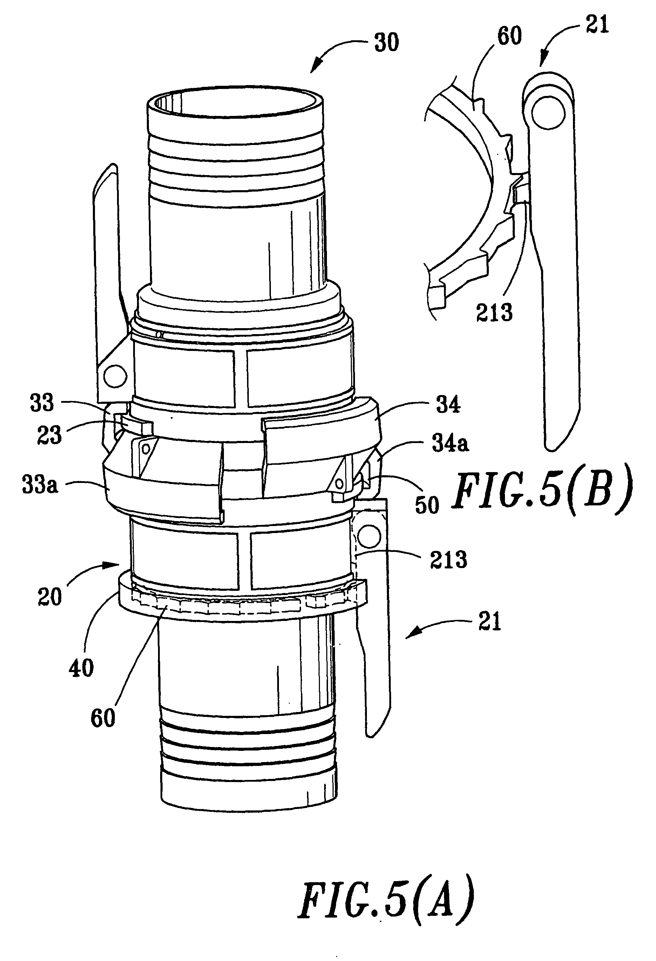

With reference to Fig. 5, as the connector is jointed, the protruding retaining hooks 33 and 34 are inserted into matched portions of the respective retaining hooks 34 and 33. Accordingly, the protruding retaining hooks 33a and 34a will be inserted into the portions of the body without any retaining hooks to be formed with the groove 50 at the retaining hooks 34a and the body. The other portion is identical. As the slide buckle 20 is rotated, the strip 23 is gradually slide into the groove 50 until it resists against the buckle, and then the retaining handle 21 is pressed downwards as that the tenon 213 is inserted downwards to the ratchet ring 60 at the body 30. Therefore, the connection is complete.

The enhancing buckling structure of a quick connector of the present invention has the following advantages.
1. The retaining handle is convenient for the hand operation with less force and the retaining handle can be moved easily.
2. The enhancing buckling structure is stable, and thus it is needless to worry about that the releasing of the buckling portion of the joint.
3. The annular slide buckle can be detached for updating as it is worn out.

## Claims

1. A buckling structure of a quick connector, comprising:
two matched connector bodies (30) each having a concave sliding track (31), a front end thereof being extended with two retaining hooks (33, 34), each of the retaining hooks (33, 34) having a hidden groove (50) at an inner side thereof, and having a ring groove (35) in which two fixed holes (351, 352) are set up;
a slide buckle (20) having an annular shape and being inserted to the sliding track (31) of each connector body (30) for rotatably sliding, the slide buckle (20) having a strip (23) at a front end thereof which has an inclined surface in a circumferential direction thereof and is rotated to be guided into the hidden groove (50) of the respective retaining hooks (33, 34) of the matched connector body (30), and an upper portion thereof being extended with a retaining handle (21) having a tenon (213) at a lower side thereof; and
a ratchet ring (60) setting in said ring groove (35) of each connector body (30) and engaging said two fixed holes (351, 352) and said tenon (213) to fasten said ratchet ring (60) on said ring groove (35) so that, if said retaining handle (21) is pressed downwardly, said ratchet ring's position corresponds to buckle said tenon (213),
wherein said ratchet ring (60) is used as a support for rotatably locking said slide buckle (20) in the connector body (30), said slide buckle (20) is inserted into the hidden groove (50) of the respective retaining hooks (33, 34) of the matched connector body (30) by engaging said matched connector bodies (30), and the retaining handle (21) is pressed so that said tenon (213) in said retaining handle (21) and said ratchet ring (60) hook each other.

2. The buckling structure of claim 1, wherein said ratchet ring (60) can be made in proper width.

3. The buckling structure of claim 1, wherein said slide buckle (20) consists of a protected top (40) protruding outward to encircle said ratchet ring (60) as its feature.

## Patentansprüche

1. Spannstruktur eines Schnellverbinders, aufweisend:
zwei zusammenpassende Verbinderkörper (30), die jeweils eine konkave Gleitbahn (31) aufweisen, deren vorderes Ende mit zwei Haltehaken (33, 34) erweitert ist, wobei jeder der Haltehaken (33, 34) an dessen Innenseite eine verdeckte Nut (50) aufweist, und die eine Ringnut (35) aufweisen, in welcher zwei Fixierlöcher (351, 352) ausgebildet sind;
einen Gleitverschluss (20), der eine Ringform hat und in die Gleitbahn (31) jedes Verbinderkörpers (30) zum drehbaren Gleiten eingesetzt ist, wobei der Gleitverschluss (20) an dessen vorderem Ende einen Streifen (23) aufweist, welcher in dessen Umfangsrichtung eine Schrägfläche aufweist und gedreht wird, um in die verdeckte Nut (50) der jeweiligen Haltehaken (33, 34) des zusammenpassenden Verbinderkörpers (30) hinein geführt zu werden, und wobei dessen oberer Abschnitt mit einem Haltegriff (21) erweitert ist, der an dessen Unterseite einen Zapfen (213) aufweist; und
einen Ratschenring (60), der in der Ringnut (35) jedes Verbinderkörpers (30) steckt und mit den beiden Fixierlöchern (351, 352) und dem Zapfen (213) in Eingriff steht, um den Ratschenring (60) in der Ringnut (35) zu befestigen, so dass, wenn der Haltegriff (21) nach unten gedrückt ist, die Position des Ratschenringes (60) dem Verschluss des Zapfens (213) entspricht,
wobei der Ratschenring (60) als eine Unterstützung zur drehbaren Verriegelung des Gleitverschlusses (20) in dem Verbinderkörper (30) verwendet wird, der Gleitverschluss (20) in die verdeckte Nut (50) der jeweiligen Haltehaken (33, 34) des zusammenpassenden Verbinderkörpers (30) durch Eingriff der zusammenpassenden Verbinderkörper (30) eingesetzt ist, und der Haltegriff (21) derart gedrückt wird, dass der Zapfen (213) in dem Haltegriff (21) und der Ratschenring (60) einander verhaken.

2. Spannstruktur nach Anspruch 1, wobei der Ratschenring (60) in passender Weite hergestellt werden kann.

3. Spannstruktur nach Anspruch 1, wobei der Gleitverschluss (20) aus einem geschützten Oberteil (40) besteht, das nach außen vorsteht, um den Ratschenring (60) als dessen Merkmal zu umschließen.

## Revendications

1. Structure de verrouillage pour connecteur rapide, comprenant :
deux corps de connecteur appariés (30) comprenant chacun une glissière concave (31), leur extrémité avant s'étendant avec deux crochets de retenue (33, 34), chacun des crochets de retenue (33, 34) ayant une gorge recouverte (50) disposée du côté intérieur et une gorge annulaire (35) dans laquelle sont pratiqués deux trous fixes (351, 352) ;
une boucle à coulissement (20) de forme annulaire que l'on insère dans la glissière (31) de chacun des corps de connecteur (30) pour la faire coulisser en la tournant, la boucle à coulissement (20) possédant une bande (23) sur une de ses extrémités avant qui a une surface inclinée dans sa direction circonférentielle et
que l'on fait tourner pour la guider et la faire pénétrer dans la gorge recouverte (50) des crochets de retenue respectifs (33, 34) du corps de connecteur (30) apparié, et dont une partie supérieure s'étend avec une poignée de retenue (21) possédant un tenon (213) disposé du côté inférieur ; et
une bague à cliquet (60) insérée dans ladite gorge annulaire (35) de chaque corps de connecteur (30) et engageant lesdits deux trous fixes (351, 352) et ledit tenon (213) pour serrer ladite bague à cliquet (60) sur ladite gorge annulaire (35) de façon à ce que, si on abaisse ladite poignée de retenue (21), la position de ladite bague à cliquet vienne boucler ledit tenon (213),
dans laquelle ladite bague à cliquet (60) est utilisée comme support pour verrouiller en rotation ladite boucle à coulissement (20) dans le corps de connecteur (30), ladite boucle à coulissement (20) est insérée dans la gorge recouverte (50) des crochets de retenue respectifs (33, 34) du corps de connecteur (30) apparié en engageant lesdits corps de connecteurs appariés(30), et on appuie sur la poignée de retenue (21) de façon à ce que ledit tenon (213) disposé dans ladite poignée de retenue (21) et ladite bague à cliquet (60) s'accrochent l'un à l'autre.

2. Structure de verrouillage selon la revendication 1, dans laquelle ladite bague à cliquet (60) peut avoir une largeur appropriée.

3. Structure de bouclage selon la revendication 1, dans laquelle ladite boucle à coulissement (20) a pour caractéristique d'être composée d'une partie supérieure de protection (40) qui est saillante extérieurement pour entourer ladite bague à cliquet (60)
